Europäisches Patentamt

European Patent Office

Office européen des brevets

(19)

(11) Publication number: 0 189 629
A1

## EUROPEAN PATENT APPLICATION

(21) Application number: 85306622.3

(22) Date of filing: 17.09.85

(51) Int. Cl.⁴: **A01N 43/653**

(30) Priority: 16.01.85 US 692365

(43) Date of publication of application:
06.08.86 Bulletin 86/32

(84) Designated Contracting States:
AT CH DE IT LI NL SE

(71) Applicant: VIRATEK, INC.
3300 Hyland Avenue
Costa Mesa California 92626(US)

(72) Inventor: Fallis, Richard Monroe
1825 Wedgewood Drive
Upland California 91786(US)
Inventor: Smith, Robert Angus
221 17th Street
Santa Monica California 90402(US)

(74) Representative: Goldin, Douglas Michael et al
J.A. KEMP & CO. 14, South Square Gray's Inn
London WC1R 5EU(GB)

(54) Method of treatment of viral diseases in plants utilizing ribavirin.

(57) The compound 1- β-D-ribofuranosyl-1,2,4-triazole-3-
-carboxamide and the 2,3,5-triacetyl or 5'butyryl derivatives
thereof are utilized alone or in combination with other antiviral
or penetrating agents in the treatment or prevention of viral or
viroid-induced diseases in plants. Specific viruses against
which use of the invention is efficacious include potexviruses,
potyviruses, closteroviruses, tymoviruses, carlaviruses,
cucumoviruses, ilarviruses, tombusviruses, tobamoviruses,
bromoviruses, tomato spotted wilt viruses and alfalfa mosaic
viruses.

EP 0 189 629 A1

# METHOD OF TREATMENT OF VIRAL DISEASES IN PLANTS UTILIZING RIBAVIRIN

## RELATED U.S. PATENT DOCUMENTS

This application is related to U.S. Patent No. 4,211,771, issued July 8, 1980, U.S. Patent No. 3,984,396, issued October 5, 1976, U.S. Patent No. 3,897,415, Issued July 29, 1975 and Reissue No. 29,835, reissued November 14, 1978. All of these disclosures are incorporated herein by reference.

## BACKGROUND OF THE PRESENT INVENTION

The field of the present invention is antiviral agents for combatting viral diseases in plants.

Viruses and viroids are responsible for a wide variety of plant diseases which cause significant and costly crop losses annually. In annual crops grown from seed, the losses often vary from year to year depending upon environmental conditions. Viruses in perennial tree crops often cause progressively increasing losses (so-called declines) as the plants age. Such chronic diseases can have very serious economic consequences because of the time, labor, capital and land invested in the crop. The costs associated with viral diseases in plants include not only the expense of replacement but also the crop loss while waiting for the replaced crop to come into full production. In the case of citrus trees, for example, the growth process before trees become fully fruitful can be several years. Viruses also cause considerable losses in field crops and ornamental plants which are almost exclusively propagated vegetatively, especially potatoes, strawberries, grapes, citrus, apples, cherries, orchids, lilies, iris, roses and carnations. The virus is maintained in the vegetatively propagated stock plants and all progeny are infected in the absence of a therapy and certification program. The result is chronic crop loss. Furthermore, the costs of monitoring geographic areas for disease trends and for symptoms of disease in existing plants are associated with the eventuality of an outbreak of plant viral disease. The resulting reduction in food crops and ornamental yields poses a significant economic threat to crop growers and to the public.

Presently, the most frequently applied control for virus diseases is a series of cultural methods that prevent plants from becoming infected. Certified virus-free seed is planted in soil that is fumigated to destroy vectors such as nematodes. Planting locations or planting times are chosen so as to avoid natural aerial vectors, like aphids and leafhoppers. In order to minimize initial centers of infection, planting areas are chosen that are not heavily invaded by weeds or native plants which harbor the viruses in question. If such alternate host reservoirs exist it may be necessary to have a crop-free period to break the natural cycles that permit viruses to continually move from crop to reservoir and back again. Another type of control is breeding plants for resistance to viruses. This is effective when there are sources of resistance that can be bred into desirable plants, so long as new strains of the virus do not emerge which can overcome the resistance. This process, however, is not effective against resistant varieties in some crops. Often breeding is not a possible control measure because of the shortage of sources of suitable resistance genes.

The major problem associated with the aforementioned control methods if that neither management techniques nor breeding for resistance is effective for many viral diseases. In contrast to other pests and diseases of plants, there are no effective chemical controls in use by growers. Consequently, many diseases remain uncontrolled. Susceptible plants have no defense mechanisms to rid themselves of viruses once they are infected, unlike animals which have a well developed immune system. Once a plant is infected it is infected for life.

## BRIEF SUMMARY OF THE INVENTION

Objects of this invention include providing an antiviral agent which is active in the treatment and prevention of a wide variety of viral or viroid-induced plant diseases, which is active at low concentrations providing controllable effects, and which can be effectively delivered to the diseased plant by a variety of methods and at various stages of plant development.

The present invention is directed to the use of the compound 1- $\beta$-D-ribofuranosyl-1,2,4-triazole-3-carboxamide and its 2,3,5-triacetyl and 5'-butyryl derivatives in the treatment of diseases caused by various viruses in plants. 1- $\beta$-D-ribofuransyl-1,2,4-triazole-3-carboxamide and its derivatives have been shown to exhibit broad spectrum antiviral activity. The compounds may be administered to plants by soil drench, topically, by injection, or as a foliar spray. Furthermore, the compounds may be administered alone or in combination with other penetrating agents such as, for example, dimethyl sulfoxide (DMSO) and dimethylformamide (DMF), or antiviral agents such as, for example, adenine arabinoside depending upon the environment and the particular viral entity being treated.

## DETAILED DESCRIPTION OF THE INVENTION

United States Patent No. 3,798,209, which reissued November 14, 1978, as Re 29,835, disclosed the compound 1- $\beta$-D-ribofuranosyl-1,2,4-triazole-3-carboxamide as an antiviral agent exhibiting broad spectrum antiviral activity both in vitro and in vivo. 2,3,5-triacetyl and 5'-butryl derivatives of 1- $\beta$-D-ribofuranosyl-1,2,4-triazole-3-carboxamide which also exhibit antiviral activity were disclosed in U.S. Patent Nos. 3,897,415 and 3,984,396, respectively.

Below is a detailed description of the use of the compound 1- $\beta$-D-ribofuranosyl-1,2,4-triazole-3-carboxamide (or its derivatives) alone or in combination with other antiviral agents in the treatment of various viral diseases in plants. For the purposes of further illustrating the invention, 1- $\beta$-D-ribofuranosyl-1,2,4-triazole-3-carboxamide and its derivatives will be referred to interchangeably as (a) the compound, (b) Ribavirin (nonproprietary name adopted by the United States Adopted Names Council) or (c) under its chemical name above.

One potential use of Ribavirin is as a preventative or therapeutic treatment of virus-infected plants. In field grown plants any treatment which can delay the date when most plants show the effects of virus infection can be effective as a control method. One approach is to combine a reflective mulch to repel aerial vectors with a virucide such as Ribavirin. A second approach for field diseases would be to spray target weeds better known to be reservoirs of crop viruses with Ribavirin. The advantage of utilizing Ribavirin instead of an herbicide in this respect is to prevent the killing of all weeds and wild plants sprayed and not only the target plants.

Ribavirin is also useful on ornamental plants. In the case of ornamentals, perhaps more important than virus-induced losses of the product, is the decreased desirability resulting from symptoms of virus infection. Plants which are free of viral entities would also be free of disease symptoms which often manifest themselves with mottling and scarring thereby reducing the marketability of ornamentals which are sold for their visual attractiveness.

Ribavirin could be most useful as a tool to facilitate production of virus-free plants and to increase the production and quality of the next generation of plants. This could be accomplished in the production of virus-free stocks for vegetatively propagated plants such as fruit and nut trees, strawberries, or potatoes. Alternatively, Ribavirin could be incorporated into the normal tissue culture propagation procedures used routinely for the propagation of many ornamental plants. Ribavirin also has usefulness as a seed treatment to prevent seed transmission of viruses.

Another potential use of Ribavirin is to eliminate viruses or maintain plant tissues in a virus-free state during routine propagation techniques that are presently being developed. One example is the use of encapsulated somatic embryos to propagate somatic tissues to prevent sexual variation or the need for more extensive plant breeding. Ribavirin may be especially useful in maintaining virus-free plants by its application to somatic embryos. Certain plants can be propagated asexually precluding genetic changes in progeny which might otherwise occur by sexual propagation from seed. Treatment of somatic embryos with Ribavirin prior to encapsulation will preserve plant progeny in a virus-free state. The compound could also be used in combination with newly developed plant genetic engineering procedures where the Ribavirin could be incorporated into normal propagation procedures. 1-β-D-ribofuranosyl-1,2,4,-triazole-3-carboxamide and its ester derivatives (2,3,5-triacetyl and 5'-butyryl) are soluble in water and can be administered to plants, seeds, stock and soil according to this invention as an aqueous solution. The compounds are also soluble in solutions of alcohol (5-15% by volume) and water, dimethylformamide (DMF) (5-25%) and water, dimethyl sulfoxide (DMSO) (5-25%) and water and dimethyl sulfoxide alone.

Procedures for Ribavirin application can be grouped into three categories:

(1) therapeutic treatments of whole plants;

(2) production of virus-free plants via tissue culture; and

(3) treatment of seeds.

The compound can be applied as a foliar spray to whole plants together with additives which would assist penetration and coverage. Ribavirin in concentrations in the range of from about 100 ppm to about 2000 ppm are effective for foliar applications and as a soil drench.

In the treatment of trees, where size or environmental conditions prohibit the use of foliar application, the compound could be injected into the trunk by gravity flow or by pressure injection as is now done with systemic fungicides and antibiotics. A number of approaches by which Ribavirin could be used to produce virus-free plants are possible. One such approach would be to treat whole plants as described above to obtain larger virus-free zones near the growing tips. Another approach would be to regenerate large shoot tips on media containing Ribavirin to eliminate the virus.

Ribavirin could also be incorporated as a component in the media used for normal plant tissue culture propagation. Treatment could be accomplished at different developmental stages of the plant-protoplast, callus, embryos or plantlets. Ribavirin appears to be more effective during certain developmental stages in certain plants. Concentrations from about 10 to about 400 uM are effective.

At least two methods which could be used for the treatment of virus infected seeds include treating whole plants as described above to insure that seeds produced would not be harboring virus, and treating seeds produced on virus infected plants with the potential for transmission to prevent the resulting plants from becoming infected. Ribavirin could also be coated on the seed, imbibed into seeds, or applied as a soil drench.

Furthermore, Ribavirin may be used as one component of a multiple chemical treatment of virus infected tissues.

It is clear from the above discussion that Ribavirin would be useful in the prevention and treatment of plant viral diseases in both hothouse and field applications.

Ribavirin has been shown to be active against viruses in the following plant virus groups: potexviruses, potyviruses, closteroviruses, tymoviruses, carlaviruses, cucumoviruses, ilarviruses, tombusviruses, tomato spotted wilt virus and alfalfa mosaic virus. Viruses in the tobamovirus and bromovirus groups are only slightly sensitive to Ribavirin.

The following table illustrates the types of viral disease against which Ribavirin has been shown to be effective.

TABLE 1

## PLANT VIRAL DISEASES AGAINST
## WHICH RIBAVIRIN IS EFFECTIVE

| CROP TYPE | CROP | VIRUS | VIRUS GROUP |
|---|---|---|---|
| cereals | sorghuma | maize dwarf mosaic virus | potyvirus |
| cereals | wheat | wheat soil borne mosaic virus brome mosaic virus | tobamovirus bromovirus |
| field and forage | alfalfa | alfalfa mosaic virus | alfalfa mosaic virus |
| | | alfalfa latent virus | carlavirus |
| field and forage | beet | beet yellow virus beet mosaic virus | closterovirus potyvirus |
| field and forage | corn | maize dwarf mosaic virus | potyvirus |
| field and forage | soybean | soybean mosaic virus | potyvirus |
| vegetables | crucifers | turnip mosaic virus | potyvirus |
| vegetables | cucurbits | watermelon mosaic viruses 1 and 2 | potyvirus |
| | | cucumber mosaic virus | cucumovirus |
| vegetables | lettuce | lettuce mosaic virus lettuce big vein agent | potyvirus ungrouped VIRUS |
| vegetables | peppers | tobacco etch virus potato virus Y pepper veinal mottle virus pepper mottle virus cucumber mosaic virus tobacco mosaic virus | potyvirus potyvirus potyvirus potyvirus cucumovirus tobamovirus |
| vegetables | tomato | tomato mosaic virus tomato aspermy virus tomato spotted wilt virus | tobamovirus cucumovirus tomato spotted wilt virus |
| | | tobacco etch virus | potyvirus |
| ornamentals | carnation | carnation necrotic fleck virus | closterovirus |
| | | carnation mottle virus | tombusvirus |
| ornamentals | iris | bearded iris mosaic virus bean yellow mosaic virus | potyvirus potyvirus |
| ornamentals | lilies | lily symptomless virus cucumber mosaic virus | carlavirus cucumovirus |

| CROP TYPE | CROP | VIRUS | VIRUS GROUP |
|---|---|---|---|
| ornamentals | orchids | odontoglossum ringspot virus | tobarovirus |
| | | cymbidium mosaic virus | potexvirus |
| ornamentals | roses | apple mosaic virus | ilarvirus |
| | | prunus necrotic ringspot virus | ilarvirus |
| tree fruits | apple | apple chlorotic leafspot virus | closterovirus |
| | | apple stem grooving virus | closterovirus |
| | | Tulare apple mosaic virus | ilarvirus |
| | | apple mosaic virus | ilarvirus |
| tree fruits | cherry | prunus necrotic ringspot virus | ilarvirus |
| | | prune dwarf virus | ilarvirus |
| tree fruits | citrus | citrus tristeza virus | closterovirus |
| vegetables | potato | potato virus X | potexvirus |
| | | potato virus Y | potyvirus |
| | | potato virus S | carlavirus |

In one study the antiviral effectiveness of Ribavirin was tested against tobacco mosaic virus (TMV) and Cowpea Chlorotic Mottle virus (CCMV). Strain U1 of tobacco mosaic virus was maintained in tobacco plants - (NicotianaTabacum L. "Xanthi") and infectivity was assayed on 0.01 M potassium phosphate buffer, pH 7.0, and 1% Celite by the half-leaf method on Nicotiana TabacumL. "Xanthi Nc" with 6-12 replications of each inoculum in a random block design. Cowpea Chloritic Mottle virus was maintained in Cowpea ( Vidna Unquiculata L. Walp "California Blackeye") plants and infectivity of sap diluted with the above buffer was assayed by the half-leaf method on soybean (Glycine Max L.). At four hours after mechanical inoculation, 7 mm diameter disks were removed from inoculated leaves. Ten disks per treatment were vacuum infiltrated with the appropriate chemical solution and then allowed to dry on paper towels for ten to fifteen minutes. The disks were floated on the chemical solution in 3.5 centimeter Petri dishes in a plant growth chamber at 25°C with a 14 hour photo period of approximately 15,000 1x. Control disks were similarly treated with distilled water. After 96 hours of incubation, all disks were removed from the chemicals and frozen at negative 20°C until infectivity was assayed. Infectivity in chemical-treated disks was compared to that in water-treated disks. Each chemical was tested at two-four different concentrations differing by five-fold and each experiment was repeated at least twice. Standard medium to promote tobacco callus growth consisted of Murashige and Skoog salts supplemented with 3 mg/l indole acetic acid, 0.3 mg/l kinetin, and 40 g/l sucrose in 0.8% agar. Regeneration medium was the same except that it contains 0.3 mg/l indole acetic acid with the addition of 10 mg/l N6-isopentenyl-adenine. Callus tissue was generated from pith tissues of tobacco plants infected with TMV. Chemicals were filter-sterilized and added to medium after autoclaving. Peripheral areas of calli that grew in the presence of chemicals were removed in a manner to avoid taking any of the original seed callus assayed for infectivity of TMV. New shoots that developed on media containing the chemicals were removed and assayed similarly. Ribavirin was shown to inhibit TMV and CCMV multiplication in these systems. The multiplication of CCMV was more sensitive to Ribavirin than was TMV. Tobacco callus grew and differentiated on a concentration of Ribavirin twice that required to inhibit TMV multiplication in leaf disks. However, newly developed tobacco callus or shoots still contained TMV. The concentration of Ribavirin required for the 90% inhibition of viral multiplication in leaf disks was 0.2 mM for inhibition of TMV and 0.1 mM for inhibition of CCMV.

Other experiments were performed with Lilium Longiflorum "Arai" which has been described as difficult to obtain free of virus, and with Lilium"Enchantment", both containing lily symptomless virus (LSV) and tulip breaking virus (TBV). Meristems, induced on media with or without Ribavirin, were isolated and subsequently cultured on a medium without Ribavirin. The number of adventitiously formed meristems and the average bulb weight were not significantly influenced by Ribavirin in the concentration range 0.0-40.0 uM. At 400.0 uM bulb growth was severely reduced. Leaf samples of the plants were tested for the presence of LSV and TBV by means of ELISA, the immuno-diffusion drop test and electron microscopy. The percentage of plants of L. Longiflorum "Arai" infected with LSV and/or TBV has been reduced by 40.0 uM Ribavirin, while for L. "Enchantment" the effect is less clear. These experiments conclude that Ribavirin can be a useful instrument to increase the yield of virus-free plants when meristem culture is applied to flower bulbs.

Another study tested the efficacy of Ribavirin in combination with Adenine Arabinoside on tobacco mosaic virus in tobacco tissue cultures. Tobacco callus cultures infected with TMV were exposed to different combinations of Ribavirin and Adenine Arabinoside in solid shoot inducing medium for one month and new shoots were assayed for virus. The presence of the chemicals in the medium reduced the frequency of shoot production. However, in several combinations, the regenerated shoots that were assayed were free of detectible TMV. When transferred to a medium without the chemicals, the remaining shoots continued to grow and did not develop TMV symptoms after plants had four-five leaves longer than 1 cm. Some of the plants were grown to full size in the greenhouse and were free of TMV when assayed for infectivity. Both Ribavirin and Adenine Arabinoside effectively inhibited the multiplication of TMV when assayed for infectivity. Both Ribavirin and Adenine Arabinoside effectively inhibited the multiplication of TMV in leaf cells when treatment began soon after inoculation. When unorganized callus cells were inoculated with TMV and treated with Ribavirin or Adenine Arabinoside, neither inhibited the multiplication of TMV. However, when Ribavirin in a concentration of 0.5 to 1.0 mM was used in combination with Adenine Arabinoside in a concentration of 0.1 to 1.0 mM in tobacco tissue cultures, the presence of TMV was controlled.

Other studies on ornamental plants such as orchids demonstrate that Ribavirin is effective in eliminating the usual virus pathogen of Cymbidiums, the orchid strain of tobacco mosaic virus (TMV-0). Ribavirin concentrations from 30 to 1,000 ppm have been included in tissue culture media in which orchids are being cloned, and used to drench and spray whole orchid plants in a controlled way. Virus titers were determined by transmission electron micrography and ELIZA serological tests. In order to enhance penetration of Ribavirin, 200 ppm of Dimethylsulfoxide - (DMSO) was included in all treatments including controls. The studies demonstrate that tissue cultures of Cymbidium orchids can be freed at will of the orchid strain of tobacco mosaic virus. Cultures grown on all four Ribavirin concentrations used in the study (30, 100, 300 and 1,000 ppm) developed virus-free new growth. All tissues developed under these conditions are virus-free: shoots, roots and "undifferentiated" protocormlike bodies.

Odontoglossum ring spot virus (ORSV) - infected Cymbidium mother plants have been regenerated in the presence of Ribavirin. Meristems or protocorms of Cymbidium were cultured on liquid or solid (0.7% agar) KNUDSON C medium, as modified for orchids by MOREL. Experiments have shown that protocorms of healthy Cymbidium originating from seeds grew well on media containing 0, 10 or 25 ppm of Ribavirin, but became necrotic after four weeks of culture on medium containing 50 ppm of Ribavirin. From the sixth subculture, virus was no longer detectible by ELISA test.

Another study showed that potato cultivars infected with potato virus Y can be regenerated by meristem tip culture. Although the proportion of healthy plants obtained by this technique is usually high, it requires complex media and the rate of regrowth of meristematic explants is low. Meristems were cultured on MURASHIGE and SKOOG medium supplanted with vitamin B5, and with growth substances. Other explants (shoots, fragment of shoots, stem-fragments) were grown on MURASHIGE and SKOOG medium without addition of growth substances. The presence of potato virus Y in plant material was controlled before and after in vitro culture, by biological indexing on tobacco test plants, or by serology (ELISA). Results thus obtained confirmed the elimination of potato virus Y from infected plants by meristem culture. Addition of Ribavirin - (10, 25 and 50 ppm) enhanced the regeneration rate, but phytotoxicity at virus-inhibiting concentrations makes this chemical unsuitable as a virus inhibitor with meristem culture from potato virus Y-infected potato. However, for other types of explants (shoots, shoot pieces and stem-fragments) Ribavirin at 25 or 50 ppm significantly enhanced the number of virus-free plants obtained after in vitroculture for three to four weeks. Cymbidium protocorms infected with odontoglossum ring spot virus were placed for proliferation on liquid KNUDSON C medium containing 0, 10, 25 or 40 ppm of Ribavirin. After three monthly subcultures on the same medium, Ribavirin at 10 ppm did not inhibit the multiplication of ORSV, whereas virus concentration decreased progressively in the protocorms obtained on 25 ppm of Ribavirin.

Thus, an antiviral agent is disclosed which is effective against certain viral or viroid-induced diseases in plants. While applications of this invention have been shown and described, it would be apparent to those skilled in the art that many more modifications are possible without departing from the inventive concepts herein. The invention, therefore, is not to be restricted except in the spirit of the appended claims.

## Claims

1. A method of treating plants to prevent or arrest viral or viroid-induced diseases comprising applying an effective amount of 1-$\beta$-D-ribofuranosyl-1,2,4-triazole-3-carboxamide or the 2,3,5-triacetyl or the 2,3,5-triacetyl or 5'-butyryl derivative thereof.

2. The method of claim 1 wherein the viral or viroid-induced disease is caused by a virus selected from the group consisting of tobamovirus, closterovirus, tombusvirus, carlavirus, cucumovirus, potexvirus, ilarvirus, potyvirus, bromovirus, tymovirus, alfalfa mosaic virus and tomato spotted wilt virus.

3. The method of claim 1 or claim 2 wherein an effective amount of 1-$\beta$-D-ribofuranosyl-1,2,4-triazole-3-carboxamide or the 2,3,5-triacetyl or 5'-butryl derivative thereof is applied as a soil drench, as a foliar spray or is applied by pressure or gravity injection.

4. The method of any one of claims 1 to 3 claim wherein 1-$\beta$-D-ribofuranosyl-1,2,4-triazole-3-carboxamide or the 2,3,5-triacetyl or 5'-butyryl derivative thereof is used in combination with an effective amount of a penetrating agent such as Dimethyl sulfoxide or surfactant.

5. The method of claim 3 wherein 1-$\beta$-D-ribofuranosyl-1,2,4-triazole-3-carboxamide or the 2,3,5-triacetyl or 5'-butyryl derivative thereof is applied in a concentration of about 100 to about 2000 ppm.

6. A method of treating plants to prevent or arrest viral or viroid-induced diseases which comprises (a) application of an effective amount of 1-$\beta$-D-ribofuranosyl-1,2,4-triazole-3-carboxamide or the 2,3,5-triacetyl or 5'-butyryl derivatives thereof, combined with a reflective mulch to repel aerial vectors which transmit viral diseases to plants, or (b) applying an effective amount of 1-$\beta$-D-ribofuranosyl-1,2,4-triazole-3-carboxamide or the 2,3,5-triacetyl or 5'-butyryl derivative thereof to target weeds known to be reservoirs of crop viruses, or (c) applying to vegetative seed stock an effect amount of 1-$\beta$-D-ribofuranosyl-1,2,4-triazole-3-carboxamide or the 2,3,5-triacetyl or 5'-butyryl derivative thereof, or (d) incorporating an effective amount of 1-$\beta$-D-ribofuranosyl-1,2,4-triazole-3-carboxamide or the 2,3,5-triacetyl or 5'-butyryl derivative thereof into potting soil for use in greenhouse or experimental plant plots as a prophylactic.

7. The method of claim 1 wherein an effective amount of said 1-$\beta$-D-ribofuranosyl-1,2,4-triazole-3-carboxamide or the 2,3,5-triacetyl or 5'-butyryl derivative thereof is incorporated into tissue cultures used for plant propagation.

8. The method of claim 7 wherein 1-β-D-ribofuranosyl--1,2,4-triazole-3-carboxamide or the 2,3,5-triacetyl or 5'butyryl derivative thereof is incorporated into said tissue cultures in a concentration of about 10 to about 400 μM.

9. A method of treating plants to prevent or arrest tobacco mosaic virus-induced viral disease in tobaco callus cultures wherein 1-β-D-ribofuranosyl-1,2,4-triazole-3-carboxamide or the 2,3,5-triacetyl or 5'-butyryl derivative thereof in a concentration in the range of about 0.5 to about 1.0 mM and adenine arabinoside in a concentration in the range of about 0.1-1.0 mM are incorporated into solid shoot inducing medium.

10. The method of any one of claims 1 to 9 wherein 1-β-D--ribofuranosyl-1,2,4-triazole-3-carboxamide or its 2,3,5--triacetyl or 5'-butyryl derivatives are applied in an aqueous solution.

11. The method of any one of claims 1 to 9 wherein 1-β-D--ribofuranosyl-1,2,4-triazole-3-carboxamide or its 2,3,5--triacetyl or 5'-butyryl derivatives are applied in a solution of water and alcohol.

12. The method of any one of claims 1 to 9 wherein 1-β-D--ribofuranosyl-1,2,4-triazole-3-carboxamide or its 2,3,5--triacetyl or 5'-butyryl derivatives are applied in a solution of water and dimethylformamide.

13. A plant tissue culture, seed or propagation or cultivation medium for plants, tissue cultures or seeds containing 1-β--D-ribofuranosyl-1,2,4-triazole-3-carboxamide or its 2,3,5--triacetyl or 5'-butyryl derivative.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 101, no. 13, 24th September 1984, page 215, no. 105675f, Columbus, Ohio, US; W.O. DAWSON et al.: "Examination of the mode of action of ribavirin against tobacco mosaic virus", & INTERVIROLOGY 1984, 22(2), 77-84 * Whole abstract * | 1-3,6, 13 | A 01 N 43/653 |
| X | CHEMICAL ABSTRACTS, vol. 100, no. 21, 21st May 1984, page 217, no. 169833t, Columbus, Ohio, US; H. LOZOYA-SALDANA et al.: "Effects of ribavirin and adenine arabinoside on tobacco mosaic virus in Nicotiana tabacum L. var Xanthi tissue cultures", PLANT CELL, TISSUE ORGAN CULT. 1984, 3(1), 41-8 * Whole abstract * | 1-3,6-9,13 | TECHNICAL FIELDS SEARCHED (Int. Cl.4) A 01 N |
| X | CHEMICAL ABSTRACTS, vol. 90, no. 15, 9th April 1979, page 181, no. 116311q, Columbus, Ohio, US; A. HANSEN et al.: "Inhibition of apple chlorotic leaf spot virus in Chenopodium quinoa by ribavirin", & PLANT DIS. REP. 1979, 63(1), 17-20 * Whole abstract * | 1-3,5-8,13 | |

--- -/-

The present search report has been drawn up for all claims

| Place of search | Date of completion of the search | Examiner |
|---|---|---|
| THE HAGUE | 09-05-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 95, no. 23, 7th December 1981, page 208, no. 198855k, Columbus, Ohio, US; I. SIMPKINS et al.: "Chemical suppression of virus in cultured plant tissues", & ANN. APPL. BIOL. 1981, 99(2), 161-9 * Whole abstract * | 1-3,5-8,13 | |
| X | CHEMICAL ABSTRACTS, vol. 97, no. 21, 22nd November 1982, page 294, no.176811g, Columbus, Ohio, US; R.E. KLEIN et al.: "Eradication of potato virus X from potato by ribavirin treatment of cultured potato shoot tips", & AM. POTATO J. 1982, 59(8), 359-65 * Whole abstract * | 1-3,5-8,13 | |
| | | | TECHNICAL FIELDS SEARCHED (Int. Cl.4) |
| X | CHEMICAL ABSTRACTS, vol. 99, no. 25, 19th December 1983, page 245, no. 207978q, Columbus, Ohio, US; S.M. CHEPLICK et al.: "Effect of injected antiviral compounds on apple mosaic, scar skin, and dapple apple diseases of apple trees", & PLANT DIS. 1983, 67(10), 1130-3 * Whole abstract * | 1-3,13 | |

--- -/-

The present search report has been drawn up for all claims

| Place of search | Date of completion of the search | Examiner |
|---|---|---|
| THE HAGUE | 09-05-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| | **DOCUMENTS CONSIDERED TO BE RELEVANT** | | Page 3 |
|---|---|---|---|
| Category | Citation of document with indication, where appropriate, of relevant passages | Relevant to claim | CLASSIFICATION OF THE APPLICATION (Int. Cl.4) |
| P,X | CHEMICAL ABSTRACTS, vol. 103, no. 19, 11th November 1985, page 264, no. 155715f, Columbus, Ohio, US; H. HECH: "Effect of antiviral agents on potato virus Y in intact potato plants. V. Abscisic acid, Ethrel, piperonylebutoxide, Ribavirin and other antiphytoviral agents", & BAYER. LANDWIRTSCH. JAHRB. 1984, 61(8), 1027-41 * Whole abstract * | 1-3,13 | |
| X | CHEMICAL ABSTRACTS, vol. 92, no. 19, 12th May 1980, page 160, no. 158955z, Columbus, Ohio, US; G. DE FAZIO et al.: "Effect of Virazole (Ribavirin) on tomato spotted wilt virus in two systemic hosts, tomato and tobacco", & ARCH. VIROL. 1980, 63(3-4), 305-9 * Whole abstract * | 1-3,5, 13 | TECHNICAL FIELDS SEARCHED (Int. Cl.4) |
| X | CHEMICAL ABSTRACTS, vol. 89, no. 25, 18th December 1978, page 163, no. 210293m, Columbus, Ohio, US; G. DE FAZIO et al.: "Inhibitory effect of virazole (ribavirin)) on the replication of tomato white necrosis virus (VNBT). Brief report", & ARCH. VIROL. 1978, 58(2), 153-6 | 1-3,5, 13 | |

--- -/-

The present search report has been drawn up for all claims

| Place of search | Date of completion of the search | Examiner |
|---|---|---|
| THE HAGUE | 09-05-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 4

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 99, no. 1, 4th July 1983, page 185, no. 1730u, Columbus, Ohio, US; J.H. STEVENSON et al.: "Delay of onset of leafroll symptom expression in Vitis vinifera 'Liemberger' from ribavirin-treated in vitro cultures", & CAN. J. PLANT SCI. 1983, 63(2), 557-60 * Whole abstract * | 1-3,5, 13 | |
| A | CHEMICAL ABSTRACTS, vol. 97, no. 15, 11th October 1982, page 217, no. 121932s, Columbus, Ohio, US; G. SCHUSTER: "Improvement in the antiphytoviral chemotherapy by combining ribavirin (Virazole) and 2,4-dioxo-hexahydro-1,3,5-triazine (DHT)", & PHYTOPATHOL. Z. 1982, 103(4), 323-8 * Whole abstract * | 1-13 | TECHNICAL FIELDS SEARCHED (Int. Cl.4) |

The present search report has been drawn up for all claims

| Place of search | Date of completion of the search | Examiner |
|---|---|---|
| THE HAGUE | 09-05-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82